Europäisches Patentamt

European Patent Office

Office européen des brevets

(19)

(11) Veröffentlichungsnummer : **0 047 765**
**B1**

(12) # EUROPÄISCHE PATENTSCHRIFT

(45) Veröffentlichungstag der Patentschrift :
18.01.84

(21) Anmeldenummer : **81900710.5**

(22) Anmeldetag : **20.03.81**

(86) Internationale Anmeldenummer :
**PCT/DE 81/00050**

(87) Internationale Veröffentlichungsnummer :
**WO WO/81027 (01.10.81 Gazettee 81/23)**

(51) Int. Cl.$^3$ : **B 23 K   9/02**, B 23 B 31/22

(54) ZENTRIERZAPFEN ZUR ZENTRIERUNG EINES WERKZEUGES IN EINER BOHRUNG EINES WERKSTÜCKES.

(30) Priorität : **20.03.80 DE 3010761**

(43) Veröffentlichungstag der Anmeldung :
**24.03.82 Patentblatt 82/12**

(45) Bekanntmachung des Hinweises auf die Patenterteilung : **18.01.84 Patentblatt 84/03**

(84) Benannte Vertragsstaaten :
**CH DE FR GB LI**

(56) Entgegenhaltungen :
**DE-C-   391 273**
**FR-A- 2 102 797**
**FR-A- 2 352 623**
**FR-E-    21 315**
**US-A- 3 783 230**

(73) Patentinhaber : **Reeh, Mathilde**
**Adalbert-Stifter-Strasse 1**
**D-8034 Germering (DE)**

(72) Erfinder : **GORISCH, Markus**
**Blütenstrasse 67**
**D-8031 Puchheim (DE)**

(74) Vertreter : **Patentanwälte Viering & Jentschura**
**Steinsdorfstrasse 6**
**D-8000 München 22 (DE)**

Zentrierzapfen zur Zentrierung eines Werkzeuges in einer Bohrung eines Werkstückes

Die Erfindung bezieht sich auf einen Zentrierzapfen zur Zentrierung eines Werkzeuges in einer Bohrung eines von dem Werkzeug zu bearbeitenden Werkstückes, nach dem Oberbegriff des Anspruchs 1 (FR-A-2 352 623). Das bevorzugte, wenngleich nicht einzig mögliche Anwendungsgebiet der Erfindung ist die Zentrierung eines Schweißkopfes in einem mit einer Platte oder dergleichen zu verschweißenden Rohr.

Derartige Zentrierzapfen, die mit ihrem einen Ende mit dem zu zentrierenden Werkzeug verbunden sind, weisen im allgemeinen an ihrem freien Zapfenende einen Kugelkäfig auf, in welchem eine Mehrzahl von am Zapfenumfang verteilt angeordneten Zentrierkugeln gehalten sind, die aus ihrer Betriebslage, in welcher sie über den Umfang des Käfigmantels hinausragen, radial nach innen verstellbar sind.

Die radiale Verstellbarkeit der Zentrierkugeln ist insbesondere bei einem Anwendungsfall vorteilhaft, bei welchem der Zentrierzapfen zur Zentrierung eines Schweißkopfes dient, mit welchem ein bündig mit einer Platte abschließendes Rohr an seiner Stirnfläche über eine Überfangsnaht mit der Platte verschweißt werden soll, wie beispielsweise zum Verschweißen einer Rohrplatte eines Rohrbündelwärmetauschers mit dessen Rohren erforderlich ist. Hierbei ist es nämlich möglich, daß beispielsweise durch in das Rohrende eintretendes Schweißmaterial am Innenumfang des Rohres wulstartige Vorsprünge entstehen, durch welche ein Herausziehen des Zentrierzapfens aus dem Rohr verhindert wird, wenn die Zentrierkugeln nicht radial verstellbar sind. Bei bekannten derartigen Zentrierzapfen sind die Zentrierkugeln in dem Kugelkäfig auf radial inneren Federn abgestützt, so daß sie radial nach innen federnd ausweichen können. Hierdurch wird jedoch eine gute Zentrierung mit dem Zentrierzapfen beeinträchtigt, insbesondere wenn das Werkzeug mittels der Zentrierkugeln mit dem Zentrierzapfen um dessen Achse drehbar in dem Rohr zentriert sein soll, weil durch die radial federnde Abstützung der Zentrierkugeln diese auch während des Bearbeitungsvorganges, selbst bei verhältnismäßig großen Federkräften, radial ausweichen können.

Es sind auch Zentrierzapfen eines Schweißkopfes bekannt (FR-A-2 352 623), bei welchen auf einem zentral durch den Kugelkäfig verlaufenden Dorn ein Abstützkegel für die Zentrierkugeln gegen die Kraft einer Feder axial verschiebbar ist und mit seinem Konusabschnitt zwischen die Zentrierkugeln eingreift, so daß diese einerseits in ihrer Betriebslage unter der Kraft der Feder an dem Abstützkegel abgestützt sind und andererseits durch an ihnen radial vom Kugelkäfig angreifende Kräfte den Abstützkegel gegen die Kraft der Feder zurückschieben können und selbst radial nach innen verstellt werden. Hierdurch können Abmessungstoleranzen oder Unrundheiten der Bohrung, in welche der Zentrierzapfen eingreift, ausgeglichen werden.

Der Erfindung liegt die Aufgabe Zugrunde, einen Zentrierzapfen der eingangs genannten Art derart auszubilden, daß mit einfachen Mitteln die Zentrierkugeln in ihrer zentrierenden Betriebslage radial nach innen unnachgiebig abgestützt sind, jedoch für das Herausziehen des Zapfens aus der Werkstückbohrung radial nach innen verstellbar sind.

Zur Lösung dieses Aufgabe werden die kennzeichnenden Merkmale des Anspruchs 1 vorgeschlagen.

Durch die Erfindung sind die Zentrierkugeln in ihrer Betriebslage an dem Zylinderabschnitt eines zwischen sie eingreifenden Dornes radial nach innen unnachgiebig abgestützt, so daß eine entsprechend gute Zentriergenauigkeit auch dann gewährleistet ist, wenn die Zentrierkugeln während der Bearbeitung des Werkstückes um die Zapfenachse kreisen. Für das Herausziehen des Zentrierzapfens aus der Werkstückbohrung hingegen ist eine axiale Relativverstellung zwischen den Zentrierkugeln und dem zwischen sie eingreifenden Dorn gegen Federkraft möglich, so daß in einem Fall, in welchem die Zentrierkugeln beim Herausziehen des Zapfens gegen ein Hindernis anstoßen, der Dorn mit seinem Zylinderabschnitt zwischen den Zentrierkugeln herausgezogen wird, so daß die Zentrierkugeln auf den Konusabschnitt gelangen, der ihre Radialverstellung zur Überwindung des Hindernisses zuläßt.

Die hier verwendeten Begriffe « radial » und « axial » beziehen sich jeweils auf den Zentrierzapfen.

Die Unteransprüche 2-6 betreffen weiter Ausgestaltungen des Gegenstands des Anspruchs 1.

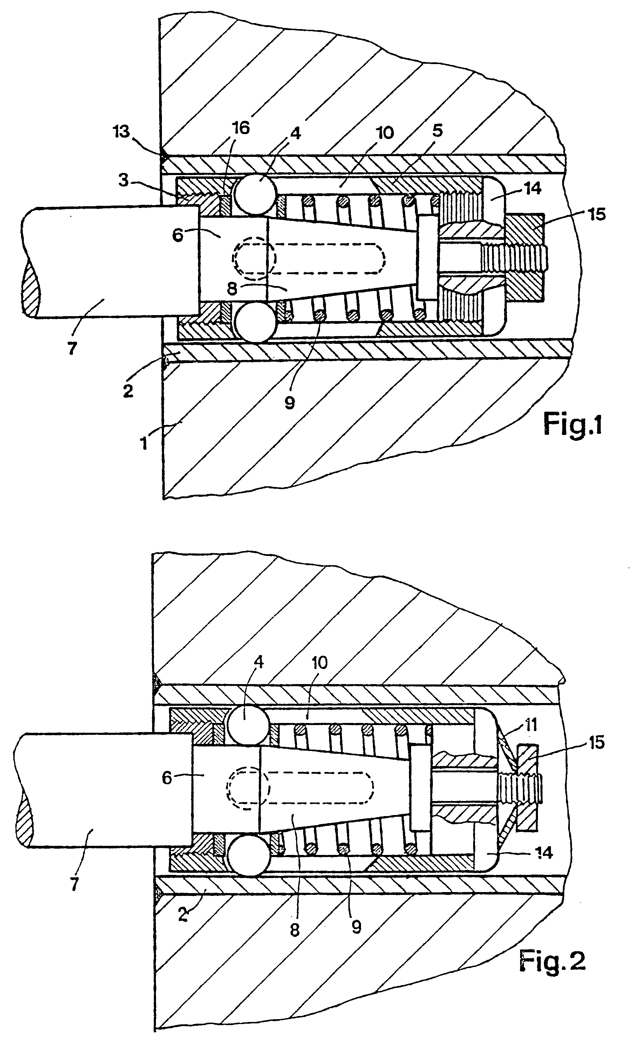

In einer ersten Ausgestaltung der Erfindung (Fig. 1) können die Zentrierkugeln in Axialführungen des Käfigmantels, die sich bis über den Konusabschnitt des Dorns erstrecken, gegen die Kraft der beispielsweise an einem Lagerring der Zentrierkugeln einerseits und an dem am freien Zapfenende gelegenen Ende des Käfigmantels andererseits abgestützten Feder axial verschiebbar geführt sein. Bei dieser Ausführungsform ist der Käfigmantel gegenüber dem Dorn axial unverstellbar an dem Zentrierzapfen gehalten.

Da jedoch die Kugelfläche der Zentrierkugeln an deren aus dem Kugelkäfig radial herausragenden Teil in überspitzem Winkel zur Zapfenachse geneigt verläuft, kann der Fall auftreten, daß die Zentrierkugeln beim Auftreffen auf einen das Herausziehen des Dorns verhindernden Wulst an diesem verklemmen, so daß sie dann nicht mehr auf den Konusabschnitt des Dorns verschoben werden können.

Daher sind bei einer bevorzugten Weiterbildung dieser Ausführungsform der Erfindung (Fig. 2), der Dorn und der Käfigmantel entgegen der Axialkraft einer zwischen sie eingesetzten, nach Überwindung dieser Axialkraft nachgiebigen Abstützvorrichtung relativ zueinander axial verstellbar (Anspruch 2), so daß der Dorn zu der dem freien Zapfenende abgewendeten Ende des Käfigmantels hin gegenüber diesem und damit den verklemmten Zentrierkugeln axial verschoben werden kann, bis sein Konusabschnitt zwischen die Zentrierkugeln gelangt. Diese Abstützvorrichtung kann beispielsweise eine den Käfigmantel mit dem Dorn normalerweise axial fest verbindende, bei Überwindung einer vorgegebenen Kraft jedoch zerbrechende Scherscheibe oder ein Scherstift sein. Es ist jedoch auch möglich, diese Abstützvorrichtung als Feder auszubilden, die zwischen Dorn und Käfigmantel axial wirkend eingesetzt ist.

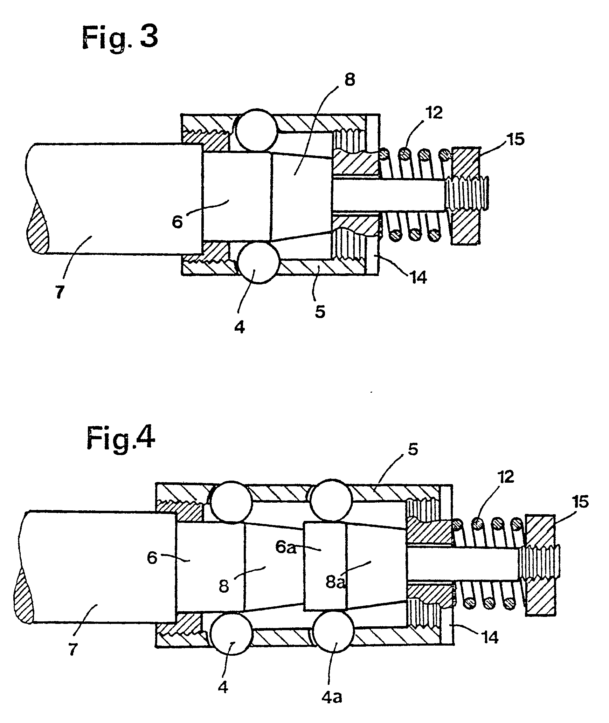

In einer zweiten, vorteilhaften Ausgestaltung der Erfindung (Fig. 3) sind der Dorn und der Käfigmantel, in welchem die Zentrierkugeln axial lagefest gehalten sind, gegen die Kraft der zwischen sie eingesetzten Feder in Richtung axial voneinander weg verstellbar (Anspruch 4).

Diese zweite Ausführungsform der Erfindung ermöglicht es, anstelle einer Umfangsreihe Zentrierkugeln zwei (Fig. 4, Anspruch 5) oder mehr axial im Abstand voneinander angeordnete Umfangsreihen Zentrierkugeln vorzusehen und entsprechend dem erfindungsgemäßen Prinzip in ihrer Betriebslage radial unnachgiebig, für das Herausziehen des Zentrierzapfens jedoch radial verstellbar abzustützen. In bevorzugter Ausgestaltung dieser zweiten Ausführungsform weist daher der Dorn eine der Anzahl der Umfangsreihen Zentrierkugeln entsprechende Mehrzahl von axial aufeinanderfolgenden Zylinderabschnitten und Konusabschnitten auf, die jeweils mit einer der Umfangsreihen Zentrierkugeln zusammenwirken, während der Käfigmantel mit dem Dorn weiterhin gegen die Kraft der Feder axial verstellbar ist. Jedesmal wenn daher eine der Zentrierkugelreihen beim Herausziehen des Zentrierzapfens aus der Werkstückbohrung auf ein Hindernis auftrifft, kann daher der mit dieser Kugelreihe zusammenwirkende Zylinderabschnitt zwischen ihnen herausgezogen werden, so daß sie auf den zugeordneten Konusabschnitt gelangen, der ihre Radialverstellung zur Überwindung des Hindernisses gestattet.

Für beide der oben erläuterten Ausführungsformen der Erfindung wird es bevorzugt, den Käfigmantel um die Dornachse drehbar zu lagern (Anspruch 6).

Die Erfindung wird anhand beispielhafter Ausführungsformen erläutert, die in ihren Einzelheiten aus der Zeichnung ersichtlich sind. In der Zeichnung zeigt :

Figur 1 im Axialschnitt eine erste Ausführungsform eines erfindungsgemäßen Zentrierzapfens in seiner Betriebslage in einem mit einer Platte zu verschweißenden Rohr,

Figur 2 eine gegenüber der in Fig. 1 weitergebildete Ausführungsform,

Figur 3 eine dritte Ausführungsform eines erfindungsgemäßen Zentrierzapfens mit in nur einer Umfangsreihe angeordneten Zentrierkugeln, und

Figur 4 eine vierte Ausführungsform mit zwei axial im Abstand voneinander angeordneten Zentrierkugelreihen.

Die aus der Zeichnung ersichtlichen Zentrierzapfen dienen, wie es aus den Fig. 1 und 2 ersichtlich ist, zum Zentrieren eines nicht gezeigten Schweißkopfes in einem eine Platte 1 durchsetzenden Rohr 2 für dessen Verschweißen mit der Platte 1 entlang einer Stirnschweißnaht 13, die zwischen dem Außenumfang des bündig mit der Platte 1 abschließenden Rohres 2 und dem Innenumfang der das Rohr in der Platte 1 aufnehmenden Bohrung derselben verlaufen soll. Zur Zentrierung des Schweißkopfes während des Schweißvorganges ragt an der Brennerseite des Schweißkopfes ein Zentrierzapfen vor, der in seinen Abmessungen an den Innenumfang des Rohres 2 angepaßt ist, so daß er in dieses zentrierend eingesteckt werden kann.

Bei der Ausführungsform aus Fig. 1 weist der Zentrierzapfen an seinem freien Zapfenende einen auf einem Dorn 7 drehbar gelagerten Kugelkäfig 3 für darin drehbar gelagerte Zentrierkugeln 4 auf, die entlang einer Umfangslinie des als Zylinderhülse ausgebildeten Käfigmantels 5 des Kugelkäfigs 3 am Umfang des Käfigmantels 5 gleichmäßig verteilt angeordnet sind. Die Zentrierkugeln 4 sind in einem am Innenumfang des Käfigmantels 5 axial gleitend verschiebbaren Lagerring 16 gehalten, an dessen dem freien Zapfenende zugewendeten Stirnseite eine als Schraubenfeder ausgebildete, axial wirkende Feder 9 angreift, die andererseits an einem in den Käfigmantel 5 eingeschraubten Stirndeckel 14 abgestützt ist. Der Käfigmantel 5 weist schlitzförmige Axialführungen 10 für die Zentrierkugeln 4 auf, wobei die Schlitzflanken und die Schlitzenden mit sich zur Zapfenachse hin öffnendem Kegelwinkel abgeschrägt sind, so daß die Zentrierkugeln 4 gegen ihr Heraustreten aus dem Käfigmantel 5 in Richtung radial nach außen gehalten sind, radial nach innen jedoch gegenüber den Radialführungen 10 wie auch den Kugelring 16 verlagerbar sind. In der in Fig. 1 gezeigten Betriebslage sind die Zentrierkugeln 4 an dem dem freien Zapfenende abgewendeten Ende der Axialführung 10 gehalten und liegen fort am Umfang eines zwischen sie eingreifenden Zylinderabschnittes 6 des Dornes 7 gleitend auf, so daß sie in ihrer Betriebslage radial nach innen abgestützt sind. Zum freien Zapfenende hin schließt an den Zylinderabschnitt 6 ein sich von diesem aus verjüngender Konusabschnitt 8 an, der sich an seinem freien Ende in einen Schraubzapfen fortsetzt, der den Stirndeckel 14 durchsetzt und auf den außen eine Mutter 15 zur axialen Festlegung des Käfigmantels 5 auf dem Dorn 7 aufgeschraubt ist. Der Käfigmantel 5 ist an seinen Stirnenden gegenüber dem Dorn 7 drehbar auf diesem gelagert.

In der aus Fig. 1 ersichtlichen Betriebslage sind daher die Zentrierkugeln 4 für eine gute Zentrierung des mit dem Dorn 7 verbundenen Schweißkopfes radial nach innen unnachgiebig abgestützt. Wenn jedoch nach dem Verschweißen des Rohrs 2 an dessen freien Ende ein radial nach innen in die Rohrbohrung hineinragender Grat oder dergleichen Hindernis entstanden ist, durch welches das Herausziehen des Zentrierzapfens 7 aus dem Rohr 2 behindert ist, werden die Zentrierkugeln 4 beim Herausziehen des Zentrierzapfens an dem Hindernis axial gegen die Kraft der Feder 9 in den Axialführungen 10 verschoben, so daß sie über den Konusabschnitt 8 gelangen, der ihre Verlagerung radial nach innen gestattet, so daß sie dem Hindernis ausweichen können.

Die Ausführungsform aus Fig. 2 entspricht im wesentlichen der aus Fig. 1, weist jedoch zusätzlich zwischen der Mutter 15 und dem Stirndeckel 14 eine axial nachgiebige Abstützvorrichtung 11 in Form einer Tellerfeder auf, welche zusätzlich die Axialverschiebung des Käfigmantels relativ zum Dorn 7 zuläßt. Wenn daher nach der Schweißarbeit der Zentrierzapfen aus dem Rohr 2 herausgezogen wird und dabei die Zentrierkugeln 4 an einem radial in die Rohrbohrung vorstehenden Hindernis verklemmt werden, ohne in den Axialführungen 10 axial auszuweichen, so daß sie dadurch nicht auf den Konusabschnitt 8 des Dorns 6 verlagert werden, kann der Dorn 7 entgegen der Kraft der Abstützvorrichtung 11 mit seinem Zylinderabschnitt 6 zwischen den Zentrierkugeln 4 herausgezogen werden, so daß diese gleichwohl über den Konusabschnitt 8 gelangen und daher nun radial nach innen zur Überwindung des Hindernisses verlagerbar sind.

Bei der Ausführungsform aus Fig. 3 ist eine Umfangsreihe Zentrierkugeln 4 in dem Käfigmantel 5 axial lagefest, jedoch radial nach innen verlagerbar gelagert. Wie bei der Ausführungsform aus Fig. 1 und 2 greift jedoch zwischen die Zentrierkugeln 4 ein Dorn 7 mit seinem Zylinderabschnitt 6 ein, an welchen sich der Konusabschnitt 8 anschließt. Am verjüngten Ende des Konusabschnittes 8 setzt sich der Dorn 7 mit einem Stirnzapfen fort, der drehbar durch den Stirndeckel geführt ist und über diesen axial hinausragt. Am Ende des Stirnzapfens ist die Mutter 14 aufgeschraubt, zwischen welcher und der Stirnseite des Stirndeckels 14 eine Feder 12 eingespannt ist. Der Käfigmantel 5 ist auf dem Zylinderabschnitt 6 und dem Stirnzapfen des Dorns 7 gegen die Kraft der Feder 12 axial verschiebbar, so daß dadurch die Zentrierkugeln 4 auf den Konusabschnitt 8 des Dorns 7 verlagert werden können und in dieser Lage radial nach innen in den Käfigmantel 5 eintreten können.

Die Ausführungsform aus Fig. 4 entspricht in ihrem grundsätzlichen Aufbau der aus Fig. 3, wobei jedoch in dem Käfigmantel 5 zwei Umfangsreihen Axialkugeln 4, 4a axial im Abstand voneinander relativ zum Käfigmantel 5 axial lagefest in diesem gehalten sind. Der Dorn 7 weist im Anschluß an das verjüngte Ende des Konusschnitts 8 einen zweiten, dem Zylinderabschnitt 6 entsprechenden Zylinderabschnitt 6a zur radial unnachgiebigen Abstützung der Zentrierkugeln 4a während der Zentrierarbeit auf. An den zweiten Zylinderabschnitt 6a ist ein dem Konusabschnitt 8 entsprechender zweiter Konusabschnitt 8a angesetzt, der die Verlagerung der Zentrierkugeln 4a radial nach innen zuläßt, wenn die Zentrierkugeln 4a beim Herausziehen des Dornes 7 aus der Rohrbohrung an ein entsprechendes Hindernis axial anlaufen. Bei der Ausführungsform aus Fig. 4 können somit durch axiale Verstellung des Käfigmantels 5 gegenüber dem Dorn 7 entgegen der Kraft der Feder 12 sowohl die Kugelreihe aus den Zentrierkugeln 4 als auch die aus den Zentrierkugeln 4a jeweils auf den zugeordneten Konusabschnitt 8, 8a verlagert werden, wenn sie für das Herausziehen des Zentrierzapfens aus der Werkstückbohrung radial nach innen verstellt werden müssen.

## Ansprüche

1. Zentrierzapfen zur Zentrierung eines Werkzeuges in einer Bohrung eines von dem Werkzeug zu bearbeitenden Werkstückes, insbesondere zur Zentrierung eines Schweißkopfes in einem mit einer Platte (1) zu verschweißenden Rohr (2), mit einem werkzeugfesten Dorn (7), auf dem am freien Zapfenende ein Kugelkäfig (3) angeordnet ist, in welchem eine Mehrzahl von am Zapfenumfang verteilt angeordneten Zentrierkugeln (4) gehalten sind, die aus ihrer Betriebslage, in welcher sie über den Umfang des Käfigmantels (5) hinausragen und am Umfang eines zwischen sie eingreifenden Bauteils abgestützt sind, das einen Zylinderabschnitt (6) und einen sich von diesem aus zum freien Zapfenende hin verjüngenden Konusabschnitt (8) aufweist, durch gegen die Kraft einer Feder (9, 12) erfolgende axiale Relativverlagerung des Bauteils und der Zentrierkugel (4) radial nach innen verstellbar sind, dadurch gekennzeichnet, daß der Zylinderabschnitt (6) und der Konusabschnitt (8) an dem Dorn (7) ausgebildet sind und die Zentrierkugeln (4) in ihrer Betriebslage an dem Zylinderabschnitt (6) anliegen.

2. Zentrierzapfen nach Anspruch 1, dadurch gekennzeichnet, daß die Zentrierkugeln (4) in Axialführungen (10) des Käfigmantels (5), die sich bis über den Konusabschnitt (8) des Dorns (7) erstrecken, gegen die Kraft der Feder (9) axial verschiebbar geführt sind.

3. Zentrierzapfen nach Anspruch 2, dadurch gekennzeichnet, daß der Dorn (7) und der Käfigmantel (5) entgegen der kraft einer zwischen sie eingesetzten, nachgiebigen Abstützvorrichtung (11) in Richtung axial voneinander weg verstellbar sind.

4. Zentrierzapfen nach Anspruch 1, dadurch gekennzeichnet, daß der Dorn (7) und der Käfigmantel (5), in welchem die Zentrierkugeln (4) axial lagefest gehalten sind, gegen die Kraft der zwischen sie eingesetzten Feder (12) in Richtung axial voneinander weg verstellbar sind.

5. Zentrierzapfen nach Anspruch 4, dadurch gekennzeichnet, daß der Dorn (7) einen sich an das Ende geringeren Durchmessers des Konusabschnitts (8) anschließenden, dem Zylinderabschnitt (6) entsprechenden zweiten Zylinderabschnitt (6a) mit einem sich daran anschließenden, dem Konusabschnitt (8) entsprechenden zweiten Konusabschnitt (8a) aufweist und in dem Käfigmantel (5) eine zweite Umfangsreihe Zentrierkugeln (4a) axial lagefest gelagert sind, die für das Zusammenwirken mit dem zweiten Zylinderabschnitt (6a) und zweiten Konusabschnitt (8a) des Dorns (7) angeordnet sind.

6. Zentrierzapfen nach einem der Ansprüche 1 bis 5, dadurch gekennzeichnet, daß der Käfigmantel (5) um die Dornachse drehbar gelagert ist.

## Claims

1. A shank for centering a tool in a bore of a workpiece to be operated on by the tool, particularly for centering a welding head in a pipe (2) to be welded together with a plate (1), having a mandrel (7) fast with the tool, a ball cage (3) arranged at the free end of the shank, in which ball cage is retained a plurality of centering balls distributed around the circumference of the shank, the balls being radially inwardly displaceable from their operating position in which they project beyond the circumference of the lining (5) of the cage and are supported at the periphery of a component which projects between them, the component having a cylindrical section (6) and a conical section (8) tapering therefrom towards the free end of the shank, the displacement of the balls taking place by virtue of axial relative displacement between the component and the centering ball (4) against the force of a spring (9, 12), characterised in that the cylindrical section (6) and the conical section (8) are formed on the mandrel (7) and the centering balls (4) bear in their operating position against the cylindrical section (6).

2. A shank according to claim 1, characterised in that the centering balls (4) are guided for axial sliding movement against the force of the spring (9) in axial guides (10) of the lining (5) of the cage, which guides extend to and above the conical section (8) of the mandrel (7).

3. A shank according to claim 2, characterised in that the mandrel (7) and the lining (5) of the cage are axially displaceable in a direction away from each other against the force of a yielding support device (11) inserted between them.

4. A shank according to claim 1, characterised in that the mandrel (7) and the lining (5) of the cage, in which the centering balls (4) are held with their axial position fixed, are axially displaceable in a direction away from each other against the force of a spring (12) inserted between them.

5. A shank according to claim 4, characterised in that the mandrel (7) has a second cylindrical section (6a) which joins to the smaller diameter end of the conical section (8) and which corresponds to the cylindrical section (6), with a second conical section (8a) which is joined to the cylindrical section (6a) and corresponds to the conical section (8) and in the lining (5) of the cage a second peripheral row of centering balls (4a) is journalled with its axial position fixed, the balls being arranged for cooperation with the second cylindrical section (6a) and the second conical section (8a) of the mandrel (7).

6. A shank according to one of claims 1 to 5, characterised in that the lining (5) of the cage is journalled for rotation about the axis of the mandrel.

## Revendications

1. Embout de centrage pour assurer le centrage d'un outil dans un trou d'une pièce à usiner par l'outil, notamment pour le centrage d'une tête de soudage dans un tube (2) à souder avec une plaque (1), comportant un mandrin (7) solidaire de l'outil et sur lequel est disposée, à l'extrémité libre de l'embout, une cage à billes (3) dans laquelle sont maintenues plusieurs billes de centrage (4) réparties sur la périphérie de l'embout et qui sont déplaçables radialement vers l'intérieur à partir de leur position de service, dans laquelle elles dépassent de la périphérie de l'enveloppe de cage (5) et sont soutenues sur la périphérie d'un composant engagé entre elles, qui comporte une partie cylindrique (6) ainsi qu'une partie conique (8) diminuant de section vers l'extrémité libre de l'embout, par un décalage axial relatif du composant et des billes de centrage (4) se produisant en opposition à la force d'un ressort (9, 12), caractérisé en ce que la partie cylindrique (6) et la partie conique (8) sont formées sur le mandrin et en ce que les billes de centrage (4) s'appliquent dans leur position de service contre la partie cylindrique (6).

2. Embout de centrage selon la revendication 1, caractérisé en ce que les billes de centrage (4) sont guidées de manière à se déplacer axialement en opposition à la force du ressort (9) dans des guides axiaux (10) de l'enveloppe de cage (5) qui s'étendent jusqu'au-dessus de la partie conique (8) du mandrin (7).

3. Embout de centrage selon la revendication 2, caractérisé en ce que le mandrin (7) et l'enveloppe de cage (5) peuvent être écartés axialement l'un de l'autre en opposition à la force d'un dispositif d'appui flexible (11) qui est engagé entre eux.

4. Embout de centrage selon la revendication 1, caractérisé en ce que le mandrin (7) et l'enveloppe de cage (5), dans lequel sont maintenues axialement les billes de centrage (4) dans des positions fixes, peuvent être écartés axialement l'un de l'autre en opposition à la force du ressort (12) interposé entre eux.

5. Embout de centrage selon la revendication 4, caractérisé en ce que le mandrin (7) comporte une seconde partie cylindrique (6a), correspondant à la partie cylindrique (6), placée à la suite de l'extrémité de petit diamètre de la partie conique (8) et qui est suivie par une seconde partie conique (8a) correspondant à la partie conique (8) et en ce qu'il est prévu dans l'enveloppe de cage (5) une seconde rangée périphérique de billes de centrage (4) disposée axialement dans une position fixe et qui sont agencées de manière à coopérer avec la seconde partie cylindrique (6a) et la seconde partie conique (8a) du mandrin (7).

6. Embout de centrage selon l'une des revendications 1 à 5, caractérisé en ce que l'enveloppe de cage (5) est montée de façon à pouvoir tourner autour de l'axe du mandrin.

0 047 765

Fig.1

Fig.2

# Fig. 3

# Fig.4